# EUROPÄISCHE PATENTSCHRIFT

(11) **EP 2 315 686 B1**
(45) Veröffentlichungstag und Bekanntmachung des Hinweises auf die Patenterteilung: **25.12.2013**
(21) Anmeldenummer: 09775882.5
(22) Anmeldetag: 27.05.2009
(51) Int. Cl.: B60R 21/0136, B60R 21/013

(54) **VERFAHREN ZUR ERMITTLUNG EINES UNFALLSCHWEREKRITERIUMS MITTELS EINES BESCHLEUNIGUNGSSIGNALS UND EINES KÖRPERSCHALLSIGNALS**
METHOD FOR DETERMINING A CRITERION OF THE SEVERITY OF AN ACCIDENT BY MEANS OF AN ACCELERATION SIGNAL AND A SOLID-BORNE SOUND SIGNAL
PROCÉDÉ POUR DÉTERMINER UN CRITÈRE DE GRAVITÉ D'UN ACCIDENT À L'AIDE D'UN SIGNAL D'ACCÉLÉRATION ET D'UN SIGNAL DE BRUIT DE STRUCTURE

(30) Priorität: 27.08.2008 DE 102008039957
(43) Veröffentlichungstag der Anmeldung: 04.05.2011
(73) Patentinhaber: Continental Automotive GmbH, 30165 Hannover (DE)
(72) Erfinder: FESER, Michael, 93092 Barbing (DE); SMYKALLA, Christian, 93047 Regensburg (DE); FORSTER, Andreas, 93086 Wörth (DE); GEISSLER, Udo, 63825 Blankenbach (DE)
(74) Vertreter: Büchner, Jörg
(86) Internationale Anmeldenummer: PCT/DE2009/000754
(87) Internationale Veröffentlichungsnummer: WO 2010/022692

(56) Entgegenhaltungen:
- EP-A- 0 904 989
- US-B1- 7 278 657

## Beschreibung

Die Erfindung betrifft ein Verfahren zur Ermittlung eines Unfallschwerekriteriums mittels eines Beschleunigungssignals und eines Körperschallsignals gemäß dem Oberbegriff von Anspruch 1.

Um Insassen eines Kraftfahrzeugs wie auch andere Verkehrsteilnehmer im Falle eines Zusammenstosses wirksam schützen zu können, ist eine schnelle und zuverlässige Detektion eines Aufpralls und korrekte Bewertung der Unfallschwere erforderlich. Die Sensorik soll in möglichst kurzer Zeit einen Aufprall erkennen, andererseits aber nur dann zu einer Auslösung von Schutzeinrichtungen für Insassen und andere Verkehrsteilnehmer führen, wenn die Unfallschwere entsprechend hoch ist, da die Schutzeinrichtungen in vielen Fällen nicht ohne weiteres rücksetzbar sind. Erschütterungen, Bordsteinrempler oder ein Hammer- oder Steinschlag gegen die äußere Fahrzeughaut weisen zunächst auch recht signifikante Amplituden auf, dürfen aber nicht zur Auslösung führen.

Seit Jahrzehnten wird dazu die beim Aufprall auftretende niederfrequente entgegen der Fahrtrichtung gerichtete Beschleunigung, also die Verzögerung ausgewertet, deren Integral im Wesentlichen den Geschwindigkeitsabbau im Aufprall beschreibt. Aufgrund der Sicherheitsknautschzonen des Fahrzeugs treten im Fahrzeuginneren die Beschleunigungssignale bei einem Aufprall jedoch deutlich verzögert auf. Aus dem Inneren in den Randbereich des Fahrzeugs verlagerte Beschleunigungssensoren, sogenannte Pole-Catcher, Upfront-Sensoren oder Seitensatelliten können für die jeweilige Auftreffzone zwar deutlich früher ansprechen, wirken aber immer nur lokal und müssen daher in größerer Anzahl verbaut werden, was wiederum die Kosten deutlich erhöht.

Daher wird in den letzten Jahren intensiv am Einsatz alternativer Sensorkonzepte geforscht. Dabei werden im Aufprall insbesondere hochfrequente Schwingungen in der Fahrzeugkarosserie, auch Körperschall genannt, betrachtet. Sind Beschleunigungssensoren ausreichend empfindlich auch für hochfrequente Schwingungen, so können diese neben den niederfrequenten Beschleunigungssignalen auch die überlagerten hochfrequenten Körperschallsignale mit detektieren.

Der Körperschall entsteht durch die entstehenden Schwingungen bei Krafteinwirkung auf die Karosserie, wobei Körperschall sowohl auf plastische wie auch elastische Verformungen reagiert und eine deutlich schnellere Signallaufzeit aufweist und daher eine deutlich frühere Aufprallerkennung ermöglicht. Andererseits treten Körperschallsignale auch bei den üblichen Nichtauslösefällen in signifikanter Stärke auf, so dass es schwierig war, auf deren Basis die Unfallschwere zuverlässig zu beurteilen.

Aus der EP 0 904 989 A2 ist ein Verfahren zur Ermittlung eines Unfallschwerekriteriums mittels eines Beschleunigungssignals und eines Körperschallsignals zu entnehmen, bei dem Flanke und Amplitude des Körperschallsignals bewertet werden.

Die Aufgabe der vorliegenden Erfindung ist es daher, ein geeignetes Verfahren zur Ermittlung eines Unfallschwerekriteriums mittels eines Beschleunigungssignals und eines Körperschallsignals anzugeben, welches einerseits eine frühzeitige, andererseits aber auch gegen Nichtauslösefälle sichere Bewertung ermöglicht.

Diese Aufgabe wird durch die Merkmale der unabhängigen Ansprüche gelöst Vorteilhafte Weiterbildungen der Erfindung ergeben sind aus den Unteransprüchen, wobei auch Kombinationen und Weiterbildungen einzelner Merkmale miteinander denkbar sind.

Ein wesentlicher Gedanke der Erfindung besteht darin, dass für schwere Unfälle massive plastische Verformungen der Fahrzeugkarosserie signifikant sind. Bei diesen Verformungen treten im Beschleunigungssignal lokale Flankenrichtungswechsel auf, d.h. für eine gewisse Zeitdauer wird die Verzögerung aufgrund des Nachgebens der Karosserieelemente geringer. Die dabei auftretenden Körperschallsignale sind besonders signifikant für die Unfallschwere.

Zur Ermittlung des Unfallschwerekriteriums wird also bei einer fallenden Flanke des Betrags des Beschleunigungssignals das dabei auftretende Körperschall- und/oder Beschleunigungssignal ausgewertet und daraus das Unfallschwerekriterium abgeleitet. Durch die Betragsbildung wird nur die vorzeichenfreie Amplitude des Signals betrachtet. Üblicherweise wird im Bereich der passiven Sicherheit dem Beschleunigungssignal bei einer positiven Beschleunigung in Fahrtrichtung eine negative Amplitude zugewiesen. Somit entspricht die fallende Flanke der im mathematischen Sinne negativen Flankenrichtung. Sofern dem Beschleunigungssignal jedoch bei einer positiven Beschleunigung in Fahrtrichtung eine positive Amplitude zugewiesen wird, entspricht in der Verzögerung die fallende Flanke der im mathematischen Sinne positiven Flankenrichtung des Beschleunigungssignals in dessen insgesamt ja negativem Bereich. Zur Vermeidung dieser Fallunterscheidung wird die Flanke bezüglich des Betrags des Beschleunigungssignals definiert, was aber letztlich jeweils die identische Phase beschreibt.

Dieses Unfallkriterium kann je nach Anforderungen des Fahrzeugs für sich alleine genommen zu einer Auslösung von Schutzeinrichtungen führen oder noch abhängig vom Vorliegen weiterer Kriterien gemacht werden.

Für dieses Verfahren und für dieses Unfallschwerekriterium wird das Körperschallausschließlich während der vorgegebenen Flankenrichtung ausgewertet, also beispielsweise integriert. Dies schließt jedoch nicht aus, dass für andere Auslösekriterien auch andere Bereiche des Körperschall- oder Beschleunigungssignals ausgewertet, bspw. über alle Zeitbereiche hinweg bewertet werden können.

Vorzugsweise wird für die Zeitdauer des Vorliegens der vorgegebenen Flankenrichtung des Beschleunigungssignals die Intensität des Körperschallsignals ausgewertet, insbesondere das Integral über den Betrag der Amplitude des Körperschallsignals, also die Summe der Abtastwerte über diese Zeitdauer bestimmt. Das Integral wird in einer Ausgestaltung der Erfindung während der vorgegebenen Flankenrichtung mit einem Schwellwert verglichen und bei Überschreitung des Schwellwerts dieses Unfallschwerekriterium auf eine Auslöseentscheidung gesetzt. Ergänzend ist in einem Ausführungsbeispiel vorgesehen, dass das Integral über eine Mehrzahl von Intervallen mit vorgegebener Flankenrichtung ermittelt wird, wobei bei Wegfall der vorgegebenen Flankenrichtung die Integration gestoppt und der ermittelte Integrationswert gemäß einem vorgegebenen Reduzierungsprozess schrittweise reduziert wird und bei erneutem Vorliegen der vorgegebenen Flankenrichtung bei dem entsprechend um den Reduzierprozess reduzierten Integrationswert die Integration fortgesetzt wird. Die Stärke der einzelnen lokal fallenden Flanken im insgesamt während des Aufpralls zunehmenden Beschleunigungsverlauf sind nämlich eher gering im Verhältnis zur Gesamtbeschleunigung, weisen aber auf diejenigen Zeiträume hin, in denen der Körperschall besonders stark auf das plastische Verformen der Karosserieteile zurückzuführen und damit signifikant für die Unfallschwere ist.

Vorzugsweise wird die Ermittlung dieses Unfallschwerekriteriums erst dann gestartet, wenn ein Mindestbetrag der Beschleunigung überschritten wird, so dass bei kleineren Erschütterungen keine weitere Bewertung von Beschleunigung und Körperschall stattfinden muss. Vorzugsweise wird aus der Differenz aufeinanderfolgender Beschleunigungswerte die Flankenrichtung erkannt und eine Flankenrichtungsänderung nur dann als solche erkannt, wenn die Differenz eine vorgegebene Schwelle übersteigt. Dies führt zu einer gewissen Glättung und ermöglicht, die Flankenrichtung insgesamt gesicherter zu erkennen und nicht auf jede geringste Änderung zu reagieren.

In einer alternativen Weiterbildung wird die Messung des Körperschallsignals und Vergleichs mit einer Mindestschwelle vorangestellt, d.h. Körperschallsignal mit einer Mindestschwelle verglichen und nur dann ausgewertet wird, wenn einerseits das Körperschallsignal diese Mindestschwelle überschreitet, andererseits aber die Flanke des Betrags des Beschleunigungssignals fallend ist. Mag dies in der Reihenfolge der durchzuführenden Vergleiche von den voranstehenden Verfahren abweichen, so weist doch auch diese Ausgestaltung die grundlegenede Berücksichtigung der fallenden Flanke des Betrags der Beschleunigung auf, wenngleich dies hier eben als zweiter Schritt geprüft wird.

Die Erfindung wird nun nachfolgend anhand eines Ausführungsbeispieles unter Zuhilfenahme der Figuren näher erläutert. Im Folgenden können für funktional gleiche und/oder gleiche Elemente mit den gleichen Bezugsziffern bezeichnet sein. Maßangaben sowie konkrete Werte zu konkreten Zeitpunkten sind nur rein beispielhaft anhand eines individuellen Fahrzeugstyps bestimmt und beschränken die Erfindung nicht.

Es zeigen
- Fig. 1:: Verlauf von Kraft, Beschleunigung und Körperschall über die Zeit in der Anfangsphase eines Aufpralls
- Fig. 2:: Einfluss deformierbarer Karosserieelemente auf den Kraftverlauf
- Fig. 3:: Beschleunigung und Körperschall beispielhaft für ein Auslöseszenario sowie einen Nicht-Auslösetest
- Fig. 4:: Beschleunigung und Körperschall beispielhaft für ein Auslöseszenario sowie einen Nicht-Auslösetest bei alternativer Auslegung des Algorithmus
- Fig. 5:: Verlauf eines Körperschallintegrationszählers mit Skizze des Abbaus des Zählerstands nach Wegfall der vorgegebenen Flankenrichtung
- Fig. 6: Beispiel eines Auslöseschema auf Basis des erfindungsgemäßen Unfallschwerekriteriums
- Fig. 7: Blockstruktur eines Schutzsystems in einem Fahrzeug

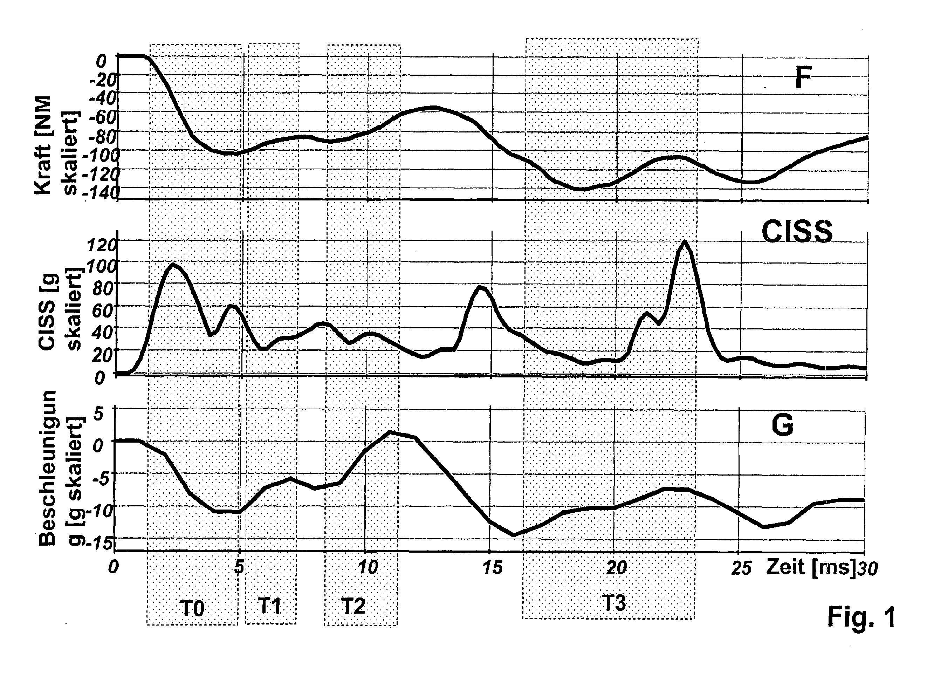

Figur 1 zeigt beispielhaft einen Verlauf von auf ein Fahrzeug in einem Aufprall einwirkender Kraft, dabei im Fahrzeug messbarer Beschleunigung sowie dabei auftretendem Körperschall. Die Richtung der Kraft F und Beschleunigung G sind hier in Fahrtrichtung positiv, d.h. im Aufprall sind die Amplituden entsprechend negativ.

Der Zeitraum T0 repräsentiert dabei den Erstkontakt mit den Deformationselementen, der bekanntermaßen bereits deutliche Amplituden bei Beschleunigung und Körperschall bewirkt, aber noch nicht signifikant für einen schweren Aufprall ist.

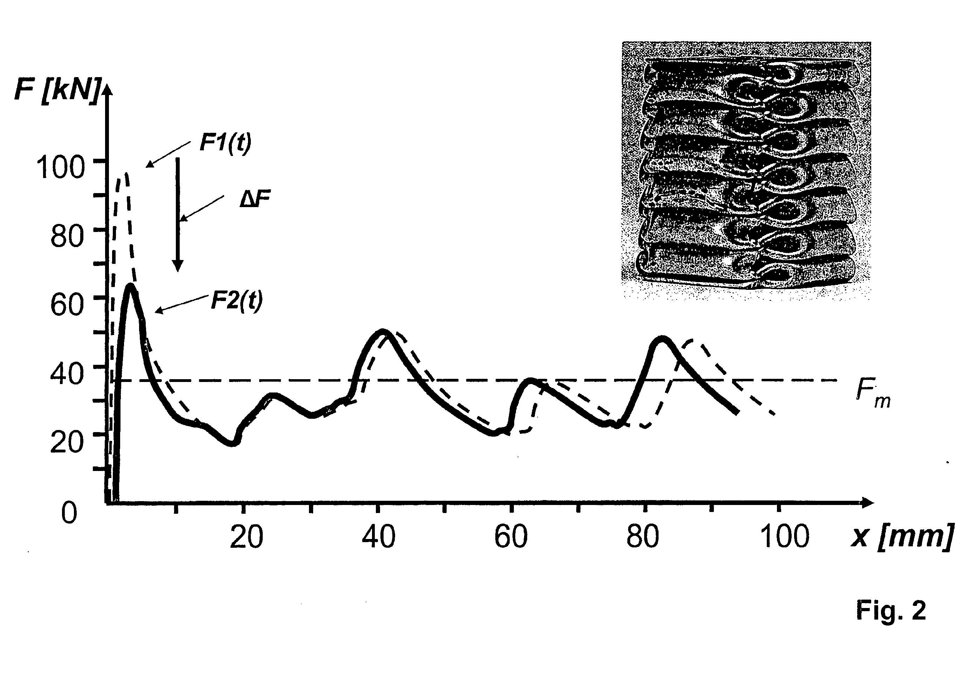

Zu den Zeiträumen T1, T2 und T3 tritt jedoch ein lokales Absinken des Beschleunigungswerts auf. Dieses Absinken ist messbar, wenngleich im Verhältnis zum Absolutbetrag der Beschleunigung relativ gering und für eine alleinige Auswertung eher ungeeignet. Dieses Absinken wird durch plastische Verformungen definierter Knautschzonen in der Fahrzeugkarosserie hervorgerufen. Die Fig. 2 skizziert mit einer durchgezogenen Linie dabei den Verlauf bei einem Element mit einer Sollfaltstelle (Kerbe im Material), die gestrichelte Linie kennzeichnet den Verlauf ohne derartige Sollfaltstellen, die erkennbar ein deutlich reduziertes erstes Kraftmaximum bewirken.

Betrachtet man nun wiederum in Figur 1 den Verlauf des Amplitudenbetrags des Körperschalls CISS, so wird deutlich, dass der Körperschall bereits früh erste deutliche Ausschläge aufweist, die aber noch nicht zweifelsfrei einem schweren Unfall zugeordnet werden, da sie nur den ersten Anprall darstellen, der auch bei der Beschleunigung deutlich zu sehen ist. Erst danach startet die Deformation, die eigentlich für die Auslösung von Schutzeinrichtungen interessiert.

Wertet man hingegen das auftretende Körperschallsignal während der fallenden Flanken des Betrags des Beschleunigungssignals aus, so kann daraus ein Unfallschwerekriterium abgeleitet werden. Dabei wird vorzugsweise die Differenz aufeinanderfolgender Beschleunigungswerte bestimmt und daraus eine Flankenrichtungsänderung erkannt wird, wenn die Differenz eine vorgegebene Schwelle übersteigt. Die Zeitfenster T1, T2 und T3 beginnen und enden daher in diesem Ausführungsbeispiel etwas verzögert gegenüber dem Beschleunigungssignalverlauf. Für dieses Unfallschwerekriterium wird jedoch nur während dieser Zeitfenster das Körperschallsignal ausgewertet, insbesondere integriert.

So wird für die Zeitdauer des Vorliegens der vorgegebenen Flankenrichtung, also während T1,T2 und T3 die Intensität des Körperschallsignals ausgewertet, also beispielsweise das Integral über den Betrag der Amplitude des Körperschallsignals bestimmt, wobei bei Vorliegen digitalisierter Körperschallsignalwerte die Integration durch Summation über die Werte erfolgen kann. Das Integral wird während der vorgegebenen Flankenrichtung mit einem Schwellwert verglichen und bei Überschreitung des Schwellwerts dieses Unfallschwerekriterium auf eine Auslöseentscheidung gesetzt.

Die endgültige Auslöseentscheidung kann dabei natürlich noch von weiteren Parametern abhängig gemacht werden. Besonders bevorzugt ist es jedoch, das Integral über eine Mehrzahl von Intervallen mit vorgegebener Flankenrichtung zu ermitteln, wobei bei Wegfall der vorgegebenen Flankenrichtung die Integration gestoppt und der ermittelte Integrationswert gemäß einem vorgegebenen Reduzierungsprozess schrittweise reduziert wird und bei erneutem Vorliegen der vorgegebenen Flankenrichtung bei dem entsprechend um den Reduzierprozess reduzierten Integrationswert die Integration fortgesetzt wird.

Mag das Körperschallsignal in den Zeitspannen T1 und T2 selbst noch zu gering sein, um den Schwellwert zu übersteigen, so tragen somit bereits in gewissem Umfang für das Ansteigen des Integralwerts bei. Versuche mit verschiedenen Fahrzeugtypen haben aber gezeigt, dass bereits in einem frühen Zeitpunkt eines schweren Crashs eine relativ große Zeitspanne mit einer betragsmäßig fallenden Flanke des Beschleunigungssignals auftritt, bei dem jedoch eine sehr hohe Intensität des Körperschalls messbar ist, so dass insbesondere über die bevorzugte Integration hier frühzeitig und sicher eine Auslöseentscheidung getroffen werden kann.

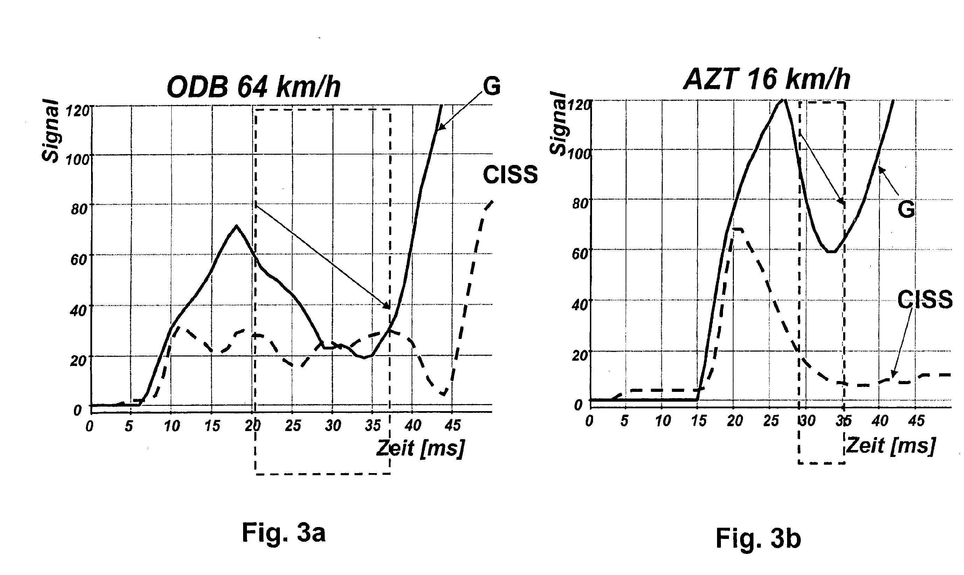

Die Signifikanz dieses Verfahrens zeigt ein Vergleich der Figuren 3a und 3b noch deutlicher. Figur 3a zeigt einen sogenannten Offset-Deformable-Barrier-Aufprall mit 64 km/h, wie dieser ein Bestandteil üblicher Crashtests ist und einen Aufprall definiert, bei dem eine Auslösung erforderlich ist, jedoch klassischen rein beschleunigungsbasierten Schutzsystemen Probleme bereitet, da nach dem Erstkontakt die Knautschzonen beider Kollisionspartner nachgeben und dadurch der massive Beschleunigungsanstieg erst deutlich verzögert einsetzt. Deutlich erkennbar ist jedoch, dass in dieser Phase des Nachgebens der Knautschzonen das Körperschallsignal eine starke Intensität aufweist, weil eben die Verformung der Knautschzonen zu entsprechend starken Materialschwingungen führt.

Betrachtet man hingegen in Fig. 3b einen sogenannten AZT-Test, definiert durch das Allianz Zentrum der Technik als einen Aufprall mit nur 16 km/h gegen ein hartes Hindernis, der einen klassischen Parkplatzunfall oder vergleichbare Nichtauslösefälle charakterisiert, so ist erkennbar, dass sowohl Beschleunigung G als auch Körperschall CISS zunächst schnell signifikant steigen, so dass in dieser Phase eine Unterscheidung zu Auslösefällen quasi unmöglich ist. Betrachtet man sich jedoch die Phase der fallenden Flanke des Beschleunigungssignals, hier wieder als Fenster gestrichelt markiert, so ist erkennbar, dass der Körperschall hier deutlich schneller absinkt und das Zeitfenster deutlich kürzer ist, so dass es insgesamt zu einem niedrigeren Gesamtwert für die Unfallschwere führt. Gerade durch die Integration des Körperschallsignalbetrags über die Zeitdauer während dieser fallenden Beschleunigungsflanke ergibt somit ein besonders signifikantes Kriterium für die Unfallschwere. Man muss sich verdeutlichen, dass alle beide Fälle deutlich vor dem Zeitraum liegen, in dem herkömmliche rein beschleunigungsbasierte Algorithmen eine sichere Auslöseentscheidung treffen können.

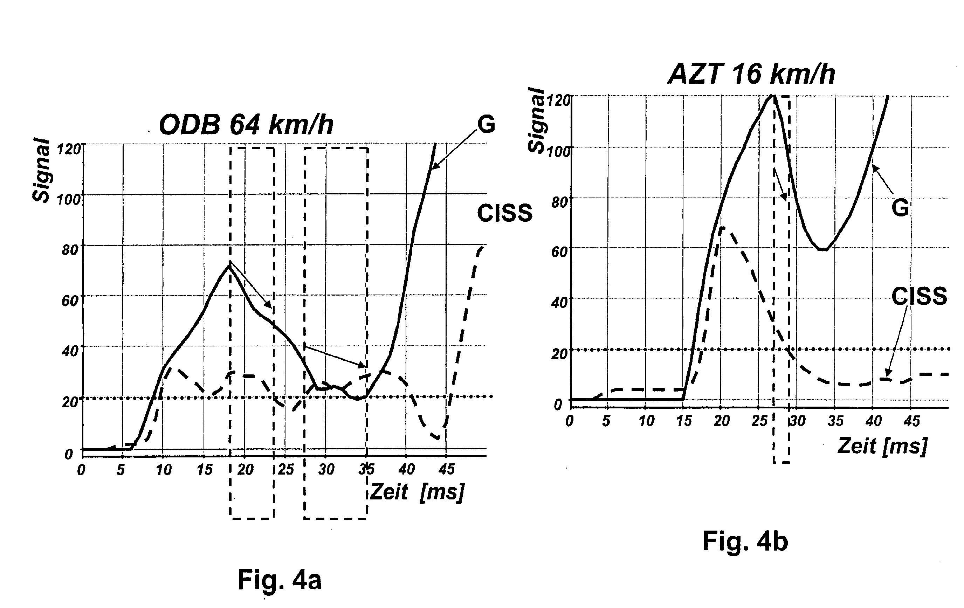

Fig. 4a und 4b zeigen ein alternatives Auswerteverfahren angewendet auf diese beiden typischen Aufprallsituationen. Bei diesem Algorithmus wird zusätzlich das Körperschallsignal mit einer Mindestschwelle verglichen, hier einmal rein beispielhaft bei einem Wert von 20 angesetzt. Wenngleich das Körperschallsignal diese Mindestschwelle übersteigt, so wird die Auswertung des Körperschall- oder Beschleunigungssignals, also insbesondere Integration nur gestartet, wenn andererseits aber die Flanke des Betrags des Beschleunigungssignals fallend ist. Es muss also wieder auch die Flankenbedingung erfüllt sein, wenngleich diese in der zeitlichen Reihenfolge im Algorithmus auch an zweiter Stelle stehen kann. An dem Beispiel in Fig. 4 wird anhand dieser beiden Fälle sogar noch deutlicher, dass durch das Flankenkriterium eine sehr gute Beschränkung der Auswertung des Körperschallsignals auf diejenigen Bereiche möglich ist, die charakteristisch für die Unfallschwere sind. Andererseits wird deutlich, dass auch das Beschleunigungssignal in seiner fallenden Flanke signifikant ausgewertet werden kann, wenn das Körperschallsignal entsprechend stark ist. D.h. als Alternative zur Integration des Körperschallsignalbetrags kann auch das Beschleunigungssignal in seiner fallenden Flanke integriert oder die Zeitdauer der fallenden Flanke ermittelt und als Unfallschwerekriterium herangezogen werden. Die Zeitdauer der fallenden Flanke ist bei einem schweren Unfall und plastischer Deformation deutlich länger als bei elastischen Stößen oder Erschütterungen, wenngleich die Maximalwerte der Beschleunigung durchaus vergleichbar groß sind. Somit wird sowohl über die Zeitdauer als auch Integration des Beschleunigungssignals letztlich der identische Grundeffekt ausgenutzt wie bei Auswertung des Körperschalls. Diese Auswertung der fallenden Flanke weist auch gegenüber den klassischen Beschleunigungsalgorithmen, welche unabhängig von der Flankenrichtung die Beschleunigung integrieren, den Vorteil auf, dass diese speziell auf diese Deformationserscheinigungen ausgerichtet ist und somit deutlich sensibler ausgestaltet werden kann, beispielsweise auch zur Herabsetzung einer konventionellen Beschleunigungsschwelle genutzt werden kann. Bei dieser Auswertung der fallenden Flanke der Beschleunigung wird aber der Körperschall benötigt, um zu erkennen, dass ein schwerer Unfall vorliegt, weil natürlich eine fallende Flanke der Beschleunigung an sich auch bei völlig unkritischen Verkehrssituationen oder Nicht-Auslösefällen immer auftritt.

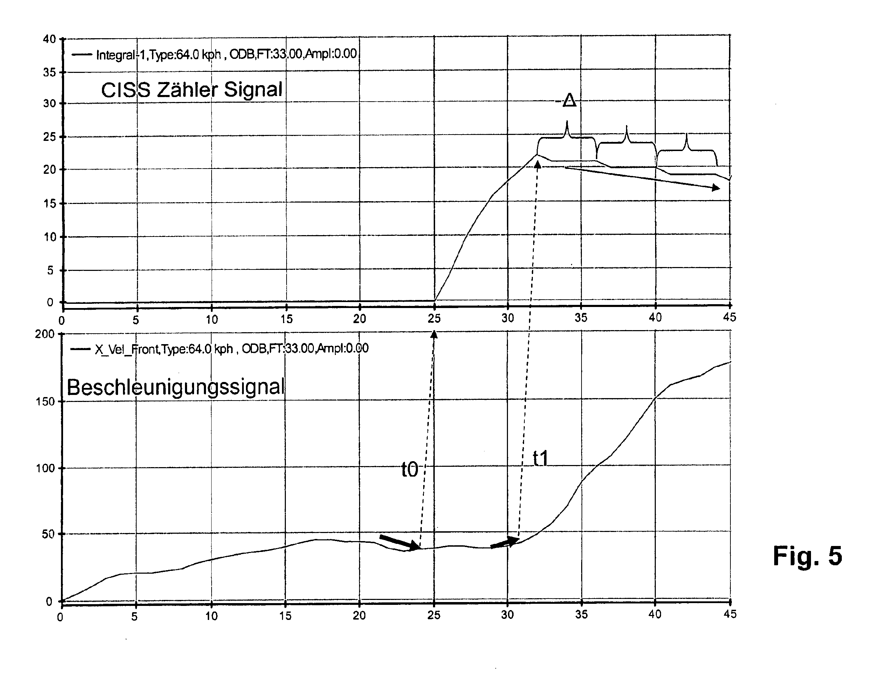

Fig. 5 skizziert noch einen Körperschallintegralzähler und insbesondere den schrittweisen Abbau des erreichten Integralwerts über die Zeit. So wird das Integral über eine Mehrzahl von Intervallen mit vorgegebener Flankenrichtung ermittelt, wobei bei Wegfall der vorgegebenen Flankenrichtung die Integration gestoppt und der ermittelte Integrationswert gemäß einem vorgegebenen Reduzierungsprozess in -Δ-Schritten reduziert wird, wobei die Zeitspanne und Stärke eines jeden Schritts fahrzeugindividuell festgelegt werden.

Bei erneutem Vorliegen der vorgegebenen Flankenrichtung wird die Integration bei dem entsprechend um den Reduzierprozess reduzierten Integrationswert fortgesetzt. Dadurch kann auch eine Mehrzahl kürzerer Zeitspannen fallender Flanke der Beschleunigung aber intensiven Körperschalls zum Erreichen der Auslöseschwelle führen.

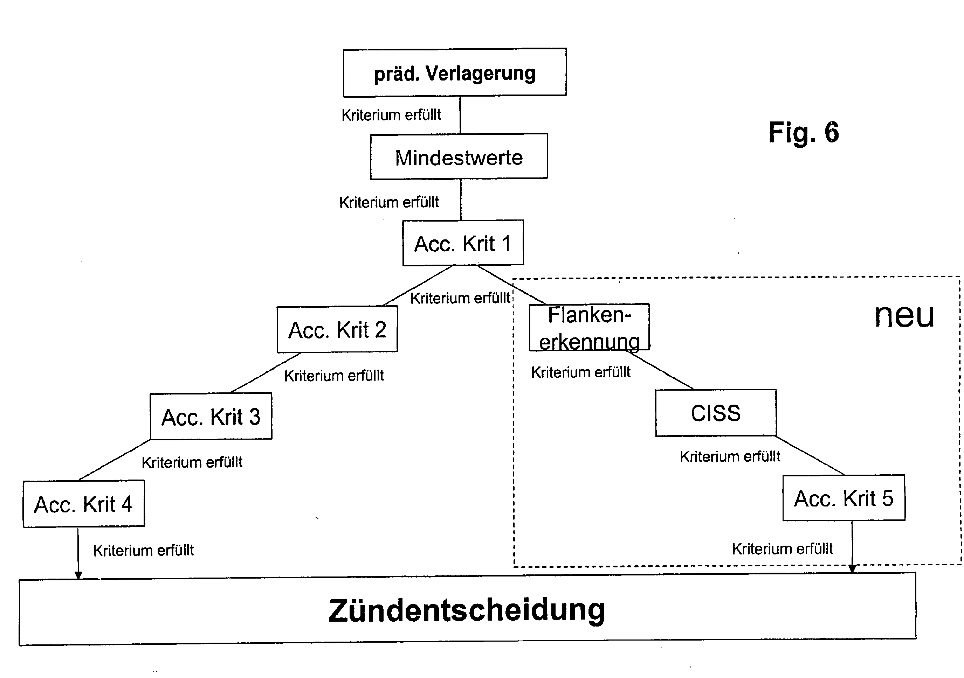

Figur 6 verdeutlicht ein Beispiel eines Gesamtauslösealgorithmus. Es ist zunächst ein Aufweckbereich mit einer ersten Beschleunigungsschwelle (Acc. Krit. 1) vorgesehen, auf die erst die gesamte weitere Auswertung gestartet wird. Erfindungsgemäß erfolgt eine Flankenerkennung des Beschleunigungssignals und wird in den Zeiträumen der fallenden Flanken des Betrags des Beschleunigungssignals das Körperschallsignal integriert und mit einer Schwelle verglichen. Wird diese überschritten, wird das Unfallschwerekriterium gesetzt. Um die Auslöseentscheidung auf Basis des Körperschalls abzusichern, wird noch ein Beschleunigungskriterium Acc. Krit. 5 abgeprüft. Als Beschleunigungskriterium kann bekanntermaßen auch eine aus der Beschleunigung abgeleitete Größe, insbesondere das Gesamt- oder Zeitfensterintegral oder der über ein Zeitfenster gemittelte Beschleunigungswert verwendet werden, wobei dieses Beschleunigungskriterium ACC Krit. 5 für den körperschallbasierten Auslösepfad deutlich geringer sein kann als bei herkömmlichen rein beschleunigungsbasierten Algorithmen.

Zusätzlich ist auf Kundenwunsch noch ein redundanter rein beschleunigungsbasierter Auslösepfad mit mehreren beschleunigungsbasierten Kriterien Acc. Krit. 2-4 vorgesehen, der unabhängig ebenfalls zur Auslösung führen kann. Dieser stellt sicher, dass selbst bei Defekt des Körperschallsensors noch eine Auslösung möglich ist.

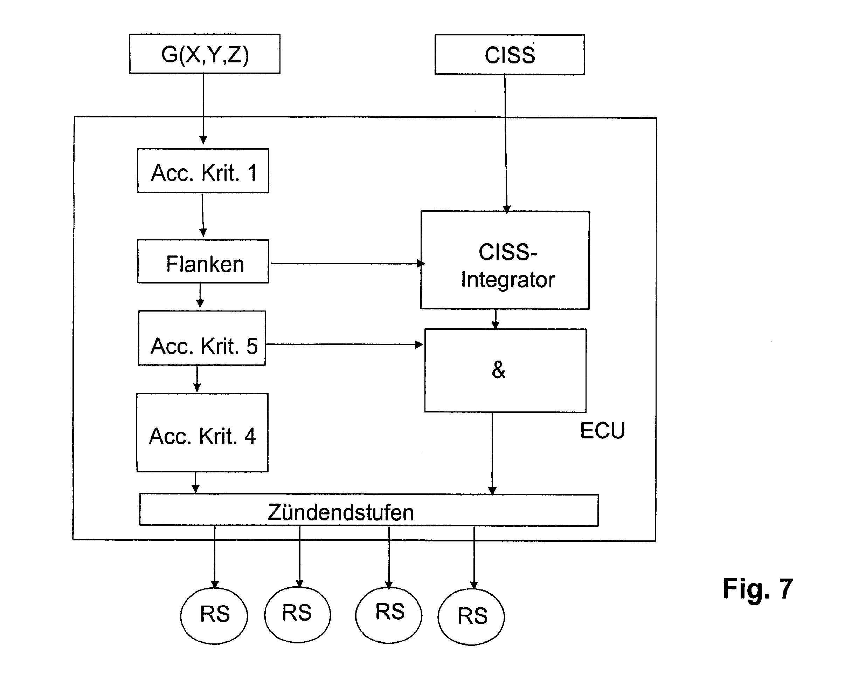

Fig. 7 skizziert noch mal ein Ausführungsbeispiel Schutzsystem zur Durchführung des Verfahrens. So ist eine Steuereinrichtung ECU vorgesehen, die über Sensoren für Beschleunigung (G(X,Y,Z)) und Körperschall (CISS) verfügt, wobei diese innerhalb oder außerhalb der Steuereinrichtung angeordnet sein können. Insbesondere kann auch ein gemeinsamer entsprechend breitbandiger Körperschall- und Beschleunigungssensor vorgesehen sein, der beide Signalanteile bereitstellt. Aus dem Beschleunigungssignal wird in der ECU soft- oder hardwaremäßig eine Reihe von Beschleunigungskriterien, unter anderen insbesondere der Flankenwechsel bereitgestellt, welcher die Integration des Körperschallsignals startet und stoppt. Kommt es zu einer Auslöseentscheidung, wird durch die Zündendstufen die Schutzeinrichtungen RS angesteuert.

## Patentansprüche

1. Verfahren zur Ermittlung eines Unfallschwerekriteriums mittels eines Beschleunigungssignals und eines Körperschallsignals, wobei die Flankenrichtung des Betrags des Beschleunigungssignals erfasst wird, **dadurch gekennzeichnet, dass** für dieses Unfallschwerekriterium das Körperschallsignal ausschließlich dann ausgewertet wird, wenn die Flanke des Betrags des Beschleunigungssignals fällt, und daraus das Unfallschwerekriterium abgeleitet wird.

2. Verfahren nach Anspruch 1, **dadurch gekennzeichnet, dass** für die Zeitdauer des Vorliegens der vorgegebenen Flankenrichtung die Intensität des Körperschallsignals ausgewertet wird.

3. Verfahren nach Anspruch 2, **dadurch gekennzeichnet, dass** das Integral über den Betrag der Amplitude des Körperschallsignals bestimmt wird.

4. Verfahren nach Anspruch 3, **dadurch gekennzeichnet, dass** das Integral während der vorgegebenen Flankenrichtung mit einem Schwellwert verglichen und bei Überschreitung des Schwellwerts dieses Unfallschwerekriterium auf eine Auslöseentscheidung gesetzt wird.

5. Verfahren nach Anspruch 4, **dadurch gekennzeichnet, dass** das Integral über eine Mehrzahl von Intervallen mit vorgegebener Flankenrichtung ermittelt wird, wobei bei Wegfall der vorgegebenen Flankenrichtung die Integration gestoppt und der ermittelte Integrationswert gemäß einem vorgegebenen Reduzierungsprozess schrittweise reduziert wird und bei erneutem Vorliegen der vorgegebenen Flankenrichtung bei dem entsprechend um den Reduzierprozess reduzierten Integrationswert die Integration fortgesetzt wird.

6. Verfahren nach einem der vorangehenden Ansprüche, **dadurch gekennzeichnet, dass** die Ermittlung dieses Unfallschwerekriteriums erst dann gestartet wird, wenn ein Mindestbetrag der Beschleunigung überschritten wird.

7. Verfahren nach einem der vorangehenden Ansprüche, **dadurch gekennzeichnet, dass** aus der Differenz aufeinanderfolgender Beschleunigungswerte die Flankenrichtung erkannt und eine Flankenrichtungsänderung erkannt wird, wenn die Differenz eine vorgegebene Schwelle übersteigt.

8. Verfahren nach einem der vorangehenden Ansprüche, **dadurch gekennzeichnet, dass** das Körperschallsignal mit einer Mindestschwelle verglichen und das Körperschallsignal nur dann ausgewertet wird, wenn einerseits das Körperschallsignal diese Mindestschwelle überschreitet, andererseits aber die Flanke des Betrags des Beschleunigungssignals fallend ist.

9. Verfahren nach einem der vorangehenden Ansprüche, **dadurch gekennzeichnet, dass** das Körperschallsignal mit einer Mindestschwelle verglichen und das Beschleunigungssignal nur dann ausgewertet wird, wenn einerseits das Körperschallsignal diese Mindestschwelle überschreitet, andererseits aber die Flanke des Betrags des Beschleunigungssignals fallend ist.

10. Steuereinrichtung zum Auslösen von Schutzeinrichtungen in einem Fahrzeug ausgestaltet zur Durchführung des Verfahrens nach einem der vorangehenden Ansprüche.

## Claims

1. A method for determining a criterion of the severity of an accident by means of an acceleration signal and a solid-borne sound signal, wherein the signal edge direction of the absolute value of the acceleration signal is detected, **characterised in that** the solid-borne sound signal is only evaluated for this criterion of the severity of an accident if the signal edge of the absolute value of the acceleration signal is a falling edge, and the criterion of the severity of the accident is derived therefrom.

2. The method according to Claim 1, **characterised in that** the intensity of the solid-borne sound signal is evaluated for the duration of the existence of the predetermined signal edge direction.

3. The method according to Claim 2, **characterised in that** the integral is determined by means of the absolute value of the amplitude of the solid-borne sound signal.

4. The method according to Claim 3, **characterised in that** the integral is compared with a threshold value during the predetermined signal edge direction, and if the threshold value is exceeded, this criterion of the severity of an accident is set to a trigger decision.

5. The method according to Claim 4, **characterised in that** the integral is determined over a plurality of intervals with the predetermined signal edge direction, whereby if the predetermined signal edge direction ceases to apply, the integration is stopped and the integration value determined is gradually reduced according to a predetermined reduction process, and when the predetermined signal edge direction exists again, the integration is continued at the integration value accordingly reduced by the reduction process.

6. The method according to any one of the preceding claims, **characterised in that** the determination of this criterion of the severity of an accident is only started when a minimum absolute value of the acceleration is exceeded.

7. The method according to any one of the preceding claims, **characterised in that** the signal edge direction is detected from the difference between successive acceleration values, and a change in signal edge direction is detected if the difference exceeds a predetermined threshold.

8. The method according to any one of the preceding claims, **characterised in that** the solid-borne sound signal is compared with a minimum threshold and the solid-borne sound signal is only evaluated if, on the one hand, the solid-borne sound signal exceeds this minimum threshold but, on the other hand, the signal edge of the absolute value of the acceleration signal is a falling edge.

9. The method according to any one of the preceding claims, **characterised in that** the solid-borne sound signal is compared with a minimum threshold, and the acceleration signal is only evaluated if, on the one hand, the solid-borne sound signal exceeds this minimum threshold but, on the other hand, the signal edge of the absolute value of the acceleration signal is a falling edge.

10. A control device for triggering protection devices in a vehicle, configured for carrying out the method according to any one of the preceding claims.

## Revendications

1. Procédé de détermination d'un critère de gravité d'accident au moyen d'un signal d'accélération et d'un signal de bruit de structure, la direction de flanc de l'ampleur du signal d'accélération étant détectée, **caractérisé en ce que**, pour ce critère de gravité d'accident, le signal de bruit de structure est analysé uniquement quand le flanc de l'ampleur du signal d'accélération descend, et le critère de gravité d'accident en est dérivé.

2. Procédé selon la revendication 1, **caractérisé en ce que** l'intensité du signal de bruit de structure est analysée pendant la durée de la présence de la direction de flanc prédéfinie.

3. Procédé selon la revendication 2, **caractérisé en ce que** l'intégrale est définie par le biais de l'ampleur de l'amplitude du signal de bruit de structure.

4. Procédé selon la revendication 3, **caractérisé en ce que** l'intégrale est comparée à une valeur de seuil pendant la direction de flanc prédéfinie et, en cas de dépassement de la valeur de seuil, ce critère de gravité d'accident est réglé sur une décision de déclenchement.

5. Procédé selon la revendication 4, **caractérisé en ce que** l'intégrale est déterminée par le biais d'une multiplicité d'intervalles avec direction de flanc prédéfinie et, en cas de disparition de la direction de flanc prédéfinie, l'intégration est arrêtée et la valeur d'intégration déterminée est réduite par étapes suivant un processus de réduction prédéfini et l'intégration est, en cas de présence renouvelée de la direction de flanc prédéfinie, poursuivie pour la valeur d'intégration réduite conformément au processus de réduction.

6. Procédé selon une des revendications précédentes, **caractérisé en ce que** la détermination de ce critère de gravité d'accident n'est lancée que lorsqu'une ampleur minimale d'accélération est dépassée.

7. Procédé selon une des revendications précédentes, **caractérisé en ce que** la direction de flanc est détectée à partir de la différence de valeurs d'accélération successives et **en ce qu'**une modification de direction de flanc est détectée quand la différence dépasse un seuil prédéfini.

8. Procédé selon une des revendications précédentes, **caractérisé en ce que** le signal bruit de structure est comparé à un seuil minimal et **en ce que** le signal de bruit de structure n'est analysé que si d'une part le signal de bruit de structure dépasse ce seuil minimal et si d'autre part le flanc de l'ampleur du signal d'accélération est descendant.

9. Procédé selon une des revendications précédentes, **caractérisé en ce que** le signal de bruit de structure est comparé à un seuil minimal et **en ce que** le signal d'accélération n'est analysé que si d'une part le signal de bruit de structure dépasse ce seuil minimal et si d'autre part le flanc de l'ampleur du signal d'accélération est descendant.

10. Dispositif de commande pour le déclenchement de dispositifs de protection dans un véhicule équipé pour la réalisation du procédé selon une des revendications précédentes.
